# EUROPEAN PATENT APPLICATION

(11) **EP 4 717 350 A1**
(43) Date of publication of application: **01.04.2026**
(21) Application number: 24810702.1
(22) Date of filing: 26.03.2024
(51) Int. Cl.: B01J 20/22, B01D 15/10, B01J 20/28, B01J 20/34, B03C 1/00, B03C 1/01, B03C 1/28, G01N 1/10

(54) **COMPLEX AND METHOD FOR COLLECTING SIALIC ACID**

(30) Priority: 22.05.2023 JP 2023084220
(71) Applicant: National Institute of Advanced Industrial Science and Technology, Chiyoda-ku Tokyo 100-8921 (JP)
(72) Inventor: HORIGUCHI, Yukichi, Tsukuba-shi, Ibaraki 305-8560 (JP); FUKUDA, Takashi, Tsukuba-shi, Ibaraki 305-8560 (JP); YASUURA, Masato, Tsukuba-shi, Ibaraki 305-8560 (JP); ASHIBA, Hiroki, Tsukuba-shi, Ibaraki 305-8560 (JP); TAN, Zheng Lin, Tokyo 121-0072 (JP)
(74) Representative: Gille Hrabal Partnerschaftsgesellschaft mbB Patentanwälte
(86) International application number: PCT/JP2024/011935
(87) International publication number: WO 2024/241694

(57) **Abstract**

Provided are a complex, which can collect and concentrate sialic acid, and a method of collecting the sialic acid. A complex (1) of the present invention is represented by the following formula (1):

Bₐ-L-Mₚ (1)

where, in the formula (1), Bₐ represents a boronic acid group having a binding constant Kₐ with sialic acid of 500 M⁻¹ or more, Mₚ represents a magnetic particle having ferromagnetism, and L represents a linker for bonding the boronic acid group and the magnetic particle. The complex represented by the formula (1) shows a state in which the boronic acid group and the magnetic particle are chemically bonded through the linker.

## Description

### [Technical Field]

The present invention relates to a complex including a boronic acid group and a magnetic particle, and a method of collecting sialic acid including using the complex.

### [Background Art]

Cancers that respective patients suffer from are extremely diverse because cancer tissues are nonuniform. In the case of breast cancer, a treatment method therefor is complicated in the extreme because, for example, whether or not the cancer can be treated by hormone therapy, and whether or not the cancer can be treated with a molecular target drug vary from tissue to tissue. In addition, cancer cells for which treatment by the hormone therapy or with the molecular target drug is not effective have high metastatic properties, and hence their survival rate is low. Accordingly, the prognosis of a patient of such cancer deteriorates. Most causes for death due to cancers result from metastasis, and hence early diagnosis of, in particular, a cancer having a metastatic property out of the cancer tissues has been required.

In recent years, a liquid biopsy method by which a cancer cell or a cancer-derived component that has flowed out to a biological fluid typified by blood is detected has been performed as a method for a cancer test. For example, an exosome secreted by a cancer cell has encapsulated therein a cancer-specific molecule that only the cancer cell specifically has, and hence the capture and detection of the cancer-specific molecule encapsulated in the exosome in a collected biological fluid have been performed. The cancer-specific molecule varies depending on the kind of a cancer, and is detected mainly by an enzyme-linked immunosorbent assay (ELISA) method utilizing an antigen-antibody reaction through the selection of a biomarker for each cancer species as follows (see Non Patent Literature 1): an epidermal growth factor receptor variant III (EGFRvIII) is selected for glioblastoma, and an endothelial cell gene locus-1 (Del-1) to be developmentally regulated is selected for the breast cancer.

The liquid biopsy method is useful in detecting an advanced cancer. However, there is a problem in that the method cannot be applied to the detection of an early cancer in a state in which the amount of a cancer cell or a cancer-derived component flowing out into a biological fluid is trace. In addition, there is a problem in that a comprehensive cancer test in which a cancer species does not matter cannot be performed because the method is specific detection with a biomarker that varies from cancer species to cancer species.

When a comprehensive cancer test in which a cancer species does not matter while an early cancer is included as a target can be achieved, significant convenience is imparted to the cancer test, and at the same time, the prognosis of a patient can be significantly improved.

Incidentally, it has long been reported that there is a correlation between sialylation on cell surface glycans and metastatic potential (see Non-Patent Literature 2). That is, sialic acid is excessively expressed on the surface of metastatic cancer.

The effectiveness of a cancer test in which sialic acid is detected by utilizing the characteristic has also been reported. A prostate-specific antigen (PSA) is used in a cancer test because the antigen shows a high value in prostate cancer. However, there is a problem in that the antigen cannot tell cancers apart in spite of being a cancer marker because the antigen also shows high values in prostatic hypertrophy and prostatitis. In this report, it has been reported that 59 cases out of 60 cases, which had all been judged positive in a PSA test, and hence could not have been identified as cancers or noncancers, were able to be correctly classified into a prostate cancer group and a noncancer group (see Non-Patent Literature 3). That is, it has been reported that the detection of sialic acid is effective as a cancer test.

With regard to the detection of sialic acid, boronic acid that selectively binds to the sialic acid has been reported (see Non-Patent Literature 4). That is, the boronic acid selectively interacts with the sialic acid out of various sugars present in a living organism.

In addition, the binding force of an aminophenylboronic acid used in this report with sialic acid is low, but in a subsequent study, boronic acid having a strong binding force with sialic acid has also been reported (see Non-Patent Literature 5). For example, it has been reported that boronic acid having a pyridine ring skeleton (5-boronopicolinic acid, 5-BPA) has a high binding constant (Kₐ) of more than 1,000 M⁻¹.

In addition, as one achievement of the inventor of the present invention (Yukichi Horiguchi), a cancer detection method in which the characteristics of sialic acid are taken into consideration has also been reported (see Non-Patent Literature 6). In this report, the following has been reported: when gold nanoparticles whose surfaces are each modified with an aminophenylboronic acid are applied onto the surface of a metastatic cancer cell, the gold nanoparticles gather on sialic acid expressed on the surface of the cancer cell and hence surface enhanced Raman scattering different from that of a normal cell is generated. In addition, as another achievement of the inventor of the present invention (Yukichi Horiguchi), it has also been reported that a bonding state between 5-boronopicolinic acid fixed onto a gold thin film and sialic acid was detected by a surface plasmon resonance (SPR) method (see Non-Patent Literature 7).

However, previous reports on the detection of sialic acid each involve a problem in that it is difficult to apply the report to a cancer test in practical use.

That is, a biological fluid to be used in a cancer test contains only a trace amount of sialic acid, and particularly in the case of an early cancer, the amount of the sialic acid in the biological fluid is remarkably trace. Accordingly, there is a problem in that it is difficult to correctly detect the sialic acid, and by extension, metastatic cancer.

To achieve a comprehensive cancer test in which a cancer species does not matter while an early cancer is included as a target, an improvement in detection performance through the establishment of a technology by which sialic acid in a biological fluid can be collected and concentrated has been required.

### [Citation List]

### [Non-Patent Literature]

[NPL 1]
   Oleoscience, Vol. 21, No. 2 (2021) 63
[NPL 2]
   G. Yogeeswaran and P. Salk, Science, 1981, 212, 1514-1516.
[NPL 3]
   Y. Haga, M. Uemura, S. Baba, K. Inamura, K. Takeuchi, N. Nomura, K. Ueda, Anal. Chem. 2019, 91, 2247.
[NPL 4]
   H. Otsuka, E. Uchimura, H. Koshino, T. Okano, K. Kataoka, J. Am. Chem. Soc. 2003, 125, 3493.
[NPL 5]
   A. Matsumoto, A. J. Stephenson-Brown, T. Khan, T. Miyazawa, H. Cabral, K. Kataoka, and Y. Miyahara, Chemical Science 8, 6165 (2017).
[NPL 6]
   B. Shashni, Y. Horiguchi, K. Kurose, H. Furusho and Y. Nagasaki, Biomaterials, 2017, 134, 143-153.
[NPL 7]
   Y. Horiguchi, K. Barthelmes, Y. Miyahara, A. Matsumoto, Chemistry Letters, 2021, 50, 1467-1469.

### [Summary of the Invention]

### [Problems to be Solved by the Invention]

The present invention has been made to solve the various problems in the related art, and an object of the present invention is to provide a complex, which can collect and concentrate sialic acid, and a method of collecting the sialic acid.

### [Means for Solving the Problems]

Solutions to the above-mentioned problems are specifically as described below.
<1> A complex represented by the following formula (1):

   Bₐ-L-Mₚ (1)

   where, in the formula (1), Bₐ represents a boronic acid group having a binding constant Kₐ with sialic acid of 500 M⁻¹ or more, Mₚ represents a magnetic particle having ferromagnetism, and L represents a linker for bonding the boronic acid group and the magnetic particle, the complex represented by the formula (1) showing a state in which the boronic acid group and the magnetic particle are chemically bonded through the linker.
<2> The complex according to the above-mentioned item <1>, wherein the magnetic particle is a spherical particle having a diameter of from 0.1 µm to 10 µm.
<3> The complex according to the above-mentioned item <1> or <2>, wherein the boronic acid group is represented by at least one selected from the group consisting of the following chemical structural formulae (Bₐ1) and (Bₐ2): 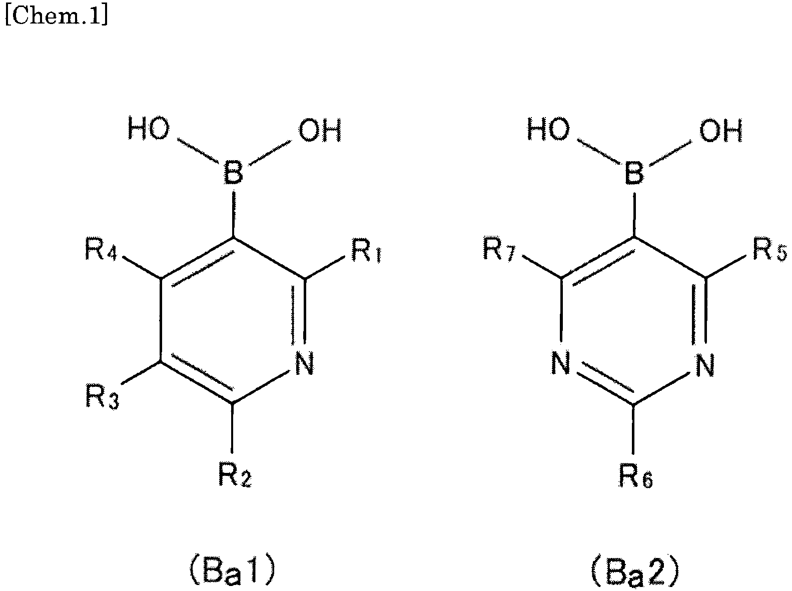 where, in the chemical structural formula (Bₐ1), at least one selected from the group consisting of R₁ to R₄ represents a divalent linking group for forming at least one selected from the group consisting of an ester bond, an ether bond, an amide bond, a urethane bond and a sulfide bond with the linker, and residual symbols each independently represent a hydrogen atom or an alkyl group having 1 or 2 carbon atoms, and in the chemical structural formula (Bₐ2), at least one selected from the group consisting of R₅ to R₇ represents a divalent linking group for forming at least one selected from the group consisting of an ester bond, an ether bond, an amide bond, a urethane bond and a sulfide bond with the linker, and residual symbols each independently represent a hydrogen atom or an alkyl group having 1 or 2 carbon atoms.
<4> The complex according to any one of the above-mentioned items <1> to <3>, wherein a formation base material for the linker includes: an amino group with which a surface of the magnetic particle is modified; a thiol compound derivative to be bonded to the boronic acid group; and a link core member having an amide bonding site to be amide-bonded to the amino group and a maleimide group to be bonded to a thiol group of the thiol compound derivative.
<5> The complex according to the above-mentioned item <4>, wherein the link core member is a heterobifunctional compound having an N-hydroxysuccinimide ester group and the maleimide group.
<6> The complex according to any one of the above-mentioned items <1> to <5>, wherein the linker has an intermediate moiety configured to modify a surface property of the magnetic particle.
<7> The complex according to the above-mentioned item <6>, wherein the intermediate moiety includes a polymer chain of a homopolymer or a copolymer of a monomer selected from the group consisting of ethylene glycol, 2-methoxy acrylate, 2-methacryloyloxyethyl phosphorylcholine and 3-[[2-(methacryloyloxy)ethyl] dimethylammonio] propionate.
<8> The complex according to the above-mentioned item <7>, wherein the polymer chain has a mass-average molecular weight of from 2,000 to 10,000.
<9> A method of collecting sialic acid, including:
   a bonding step of bonding sialic acid to the complex of any one of the above-mentioned items <1> to <8> by adjusting a pH of a liquid sample, which contains the complex and a biological fluid containing the sialic acid, to less than 6;
   a recovering step of separating and recovering the complex after the bonding step from the liquid sample with a magnet; and
   a dissociating step of dissociating the sialic acid from the complex after the recovering step in a concentration liquid having a pH adjusted to 7 or more.
<10> The method of collecting sialic acid according to the above-mentioned item <9>, wherein the bonding step, the recovering step and the dissociating step are performed on the same or different biological fluid by reusing the complex that has undergone the bonding step, the recovering step and the dissociating step.

### [Effects of the Invention]

According to the present invention, it is possible to solve the various problems in the related art, and to provide a complex, which can collect and concentrate sialic acid, and the method of collecting the sialic acid.

### [Brief Description of Drawings]

[FIG. 1]

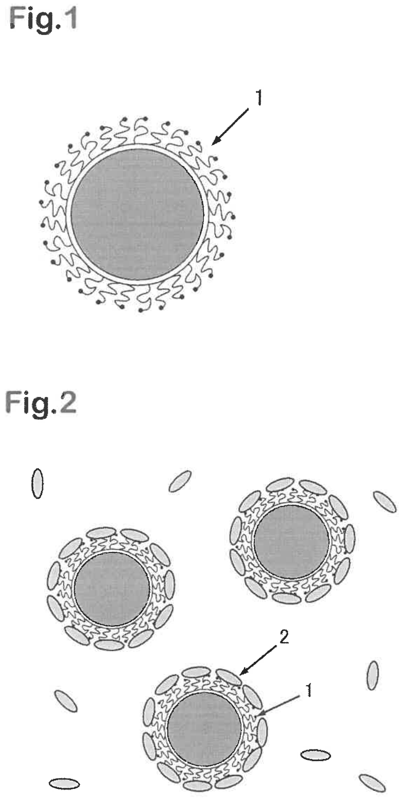

   FIG. 1 is a view for schematically illustrating a complex.
[FIG. 2]
   FIG. 2 is an explanatory view for illustrating the outline of a bonding step.
[FIG. 3]

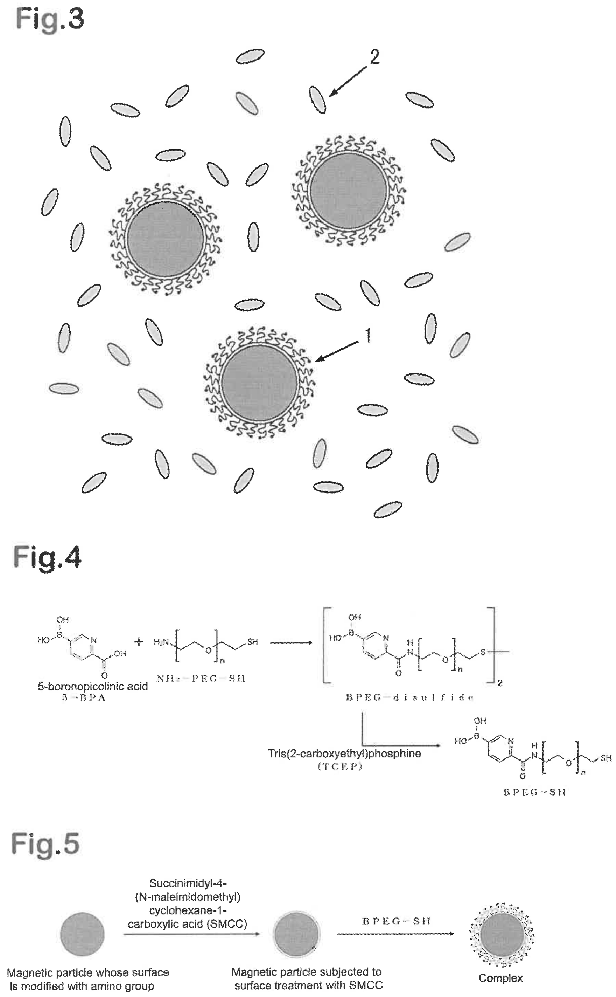

   FIG. 3 is an explanatory view for illustrating the outline of a dissociating step.
[FIG. 4]
   FIG. 4 is a view for illustrating a synthesis scheme for a bonded compound of boronic acid and a thiol compound derivative.
[FIG. 5]
   FIG. 5 is a view for illustrating a preparation scheme for a complex in which a boronic acid group is conjugated with a magnetic particle through a linker.
[FIG. 6(a)]

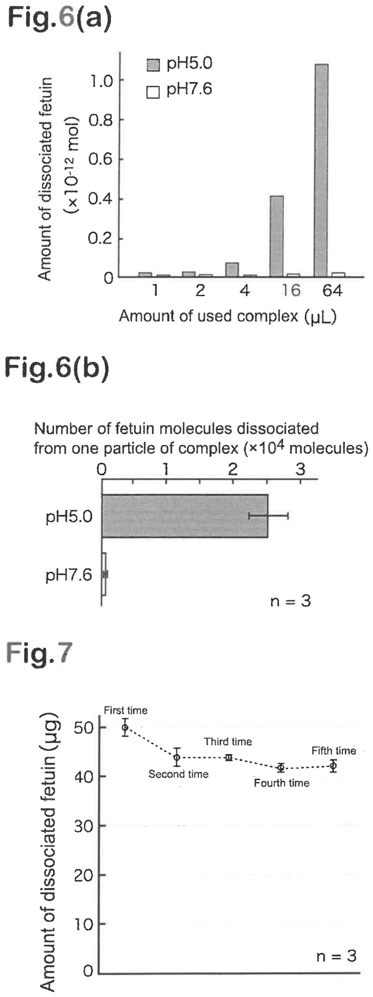

   FIG. 6(a) is a graph showing the results of the quantitative test of sialic acid.
[FIG. 6(b)]
   FIG. 6(b) is a graph showing the result of the analysis of the number of sialic acid molecules dissociated in each of the quantitative test (pH: 5.0) and a comparative test (pH: 7.6).
[FIG. 7]
   FIG. 7 is a graph showing the results of the quantitative test of the sialic acid on the reuse of the complex.
[FIG. 8(a)]

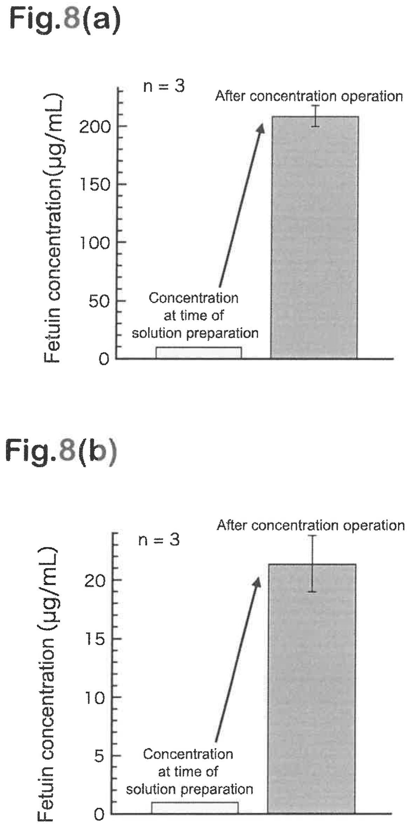

   FIG. 8(a) is a graph showing the test results of Concentration Test 1.
[FIG. 8(b)]
   FIG. 8(b) is a graph showing the test results of Concentration Test 2.

### [Description of Embodiments of the Invention]

### (Complex)

A complex of the present invention is represented by the following formula (1):

Bₐ-L-Mₚ (1)

where, in the formula (1), Bₐ represents a boronic acid group having a binding constant Kₐ with sialic acid of 500 M⁻¹ or more, Mₚ represents a magnetic particle having ferromagnetism, and L represents a linker for bonding the boronic acid group and the magnetic particle. The complex represented by the formula (1) shows a state in which the boronic acid group and the magnetic particle are chemically bonded through the linker.

The magnetic particle is arranged for the purpose of recovering the sialic acid bonded to the boronic acid group with a magnet.

The term "ferromagnetism" as used herein refers to the property by which the particle is attracted to the magnet, and the term includes ferrimagnetism.

The magnetic particle is not particularly limited and may be appropriately selected in accordance with purposes. Although a known magnetic particle formed from a ferromagnetic material, the particle having a spheroidal shape, a spherical shape or the like, may be used, a spherical particle having a particle diameter of from 0.1 µm to 10 µm is preferred.

When the particle diameter is less than 0.1 µm, it may be difficult to attract the particle with the magnet against Brownian motion in a liquid, and when the particle diameter is more than 10 µm, the total surface area of a group of dispersed particles per unit region may become smaller to reduce the efficiency with which the sialic acid is collected.

The boronic acid group is a group that selectively binds to the sialic acid out of many sugars in a biological substance, and the group is arranged for the purpose of collecting the sialic acid in a biological fluid.

The term "sialic acid" as used herein includes, in addition to a sialic acid compound, which is a substance obtained by substituting an amino group or hydroxy group of neuraminic acid, a glycoprotein in which the sialic acid compound binds to a functionalized sialic acid group, and a cell, an extracellular vesicle or the like containing the glycoprotein unless otherwise stated.

The boronic acid group (B(OH)₂R-) is not particularly limited as long as its binding constant Kₐ with the sialic acid is 500 M⁻¹ or more, and the group may be appropriately selected from aspects each having any functional group (R-). When the binding constant Kₐ with the sialic acid is less than 500 M⁻¹, it is difficult to collect a cell or a free protein having the sialic acid.

The functional group (R-) has a bonding group with the sialic acid and a bonding group with the linker.

The bonding group with the sialic acid is not particularly limited, and examples thereof include an alkyl group, an aryl group and a nitrogen-containing heterocyclic group. Further, those groups may each have any substituent.

In addition, the bonding group with the linker is not particularly limited, and is, for example, any divalent linking group for forming at least one of ester bonds, an ether bond, an amide bond, a urethane bond and a sulfide bond with the linker.

It has been known that the nitrogen-containing heterocyclic group is hydrogen-bonded to the carboxyl group of the sialic acid through the unshared electron pair of a nitrogen atom in its ring to provide a high binding constant Kₐ (see Non-Patent Literature 5).

Examples of the nitrogen-containing heterocyclic group include condensed polycyclic groups including: monocyclic groups, such as a pyridyl group and a pyrimidinyl group; dicyclic groups, such as an indolyl group, an indolinyl group, a quinolinyl group, an isoquinolinyl group, a quinazolinyl group, a quinoxalinyl group, a naphthyridinyl group, a pteridinyl group and a purinyl group; and tricyclic groups, such as an acridinyl group, a carbazolyl group, a phenanthridinyl group, a phenazinyl group and a benzoisoquinolinyl group.

A nitrogen atom in each of those nitrogen-containing heterocyclic groups to be hydrogen-bonded to the sialic acid is regarded as being tertiary because when the atom is ionized to provide a quaternary nitrogen cation, its unshared electron pair is lost.

In addition, the nitrogen-containing heterocyclic group has a structure in which a hydrogen atom at any position thereof is substituted with a group that provides any divalent linking group for forming at least one of an ester bond, an ether bond, an amide bond, a urethane bond and a sulfide bond with the linker (e.g., a hydroxyl group or an amino group, which provides a divalent linking group such as -NH- through dehydration condensation).

The boronic acid group is suitably, for example, a group represented by at least one of the following chemical structural formulae (Bₐ1) and (Bₐ2): 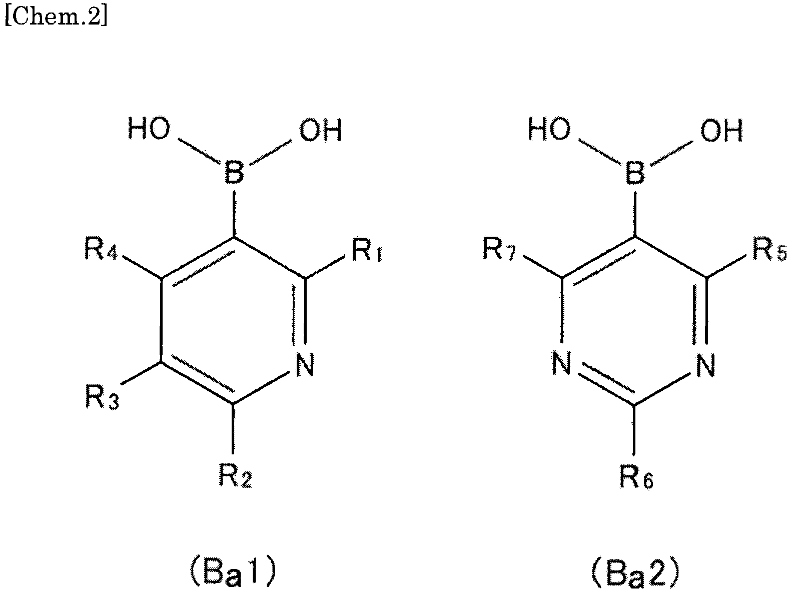 where, in the chemical structural formula (Bₐ1), at least one of R₁ to R₄ represents a divalent linking group for forming at least one of an ester bond, an ether bond, an amide bond, a urethane bond and a sulfide bond with the linker, and residual symbols each independently represent a hydrogen atom or an alkyl group having 1 or 2 carbon atoms, and in the chemical structural formula (Bₐ2), at least one of R₅ to R₇ represents a divalent linking group for forming at least one of an ester bond, an ether bond, an amide bond, a urethane bond and a sulfide bond with the linker, and residual symbols each independently represent a hydrogen atom or an alkyl group having 1 or 2 carbon atoms.

Of those, 5-boronopicolinic acid represented by the chemical structural formula (Bₐ1) in which R₂ represents a carboxyl group, and R₁, R₃ and R₄ represent hydrogen atoms has a high binding constant Kₐ with the sialic acid of more than 1,000 M⁻¹.

When the alkyl group or the aryl group is selected as the bonding group with the sialic acid, the group preferably has a structure substituted with a group having an unshared electron pair for forming a hydrogen bond with the sialic acid (e.g., -O-, =O, -N, a hydroxyl group, a carbonyl group or an amino group). A high binding constant Kₐ is provided through the hydrogen bond between the group having an unshared electron pair and the sialic acid.

The linker serves to bond the magnetic particle and the boronic acid group.

Accordingly, the linker is designed so as to have a mechanism to be bonded to the magnetic particle and a mechanism to be bonded to the boronic acid group.

Although the mechanism to be bonded to the magnetic particle is not particularly limited, the mechanism is, for example, a bonding mechanism based on an amino group with which the surface of the magnetic particle is modified. A compound that provides the amino group to the surface of the magnetic particle is not particularly limited, and may be an amine derivative in addition to an amine.

Although the mechanism to be bonded to the boronic acid group is not particularly limited, a mechanism for forming at least one of an ester bond, an ether bond, an amide bond, a urethane bond and a sulfide bond with the boronic acid group is preferred in terms of bonding stability.

In addition, the mechanism to be bonded to the boronic acid group through such bond preferably includes a compound terminated by a thiol group because the mechanism easily provides a functional surface to the magnetic particle.

Accordingly, the mechanism to be bonded to the boronic acid group is preferably a mechanism using a thiol compound derivative having a functional group to be bonded to the boronic acid group (e.g., an amino group or a hydroxyl group) and the thiol group.

Although a formation base material for the linker is not particularly limited, the base material includes a link core member that links the mechanism to be bonded to the magnetic particle and the mechanism to be bonded to the boronic acid group.

For example, when the amino group with which the surface of the magnetic particle is modified is selected as the mechanism to be bonded to the magnetic particle, and the thiol compound derivative is selected as the mechanism to be bonded to the boronic acid group, the link core member may include a heterobifunctional compound having an N-hydroxysuccinimide ester (NHS ester) group and a maleimide group because of the following reasons: the amino group easily reacts with the N-hydroxysuccinimide ester group to form a stable amide bond, and hence the member is easy to handle; and the thiol group of the thiol compound derivative easily binds to the maleimide group.

The term "formation base material for the linker" as used herein is an expression for the linker chemically bonded to the boronic acid group and the magnetic particle and means a formation material for the linker on a stage before the formation of the chemical bond with each of the boronic acid group and the magnetic particle.

Although the heterobifunctional compound is not particularly limited, succinimidyl-4-(N-maleimidomethyl) cyclohexane-1-carboxylic acid (SMCC), which is a crosslinker having both the N-hydroxysuccinimide ester group and the maleimide group, and a derivative thereof are preferred because each of SMCC and the derivative is easily dissolved in water and provides a strong link.

Thus, the formation base material for the linker is preferably formed so as to include: the amino group with which the surface of the magnetic particle is modified; the thiol compound derivative to be bonded to the boronic acid group; and a link core member having an amide bonding site to be amide-bonded to the amino group and the maleimide group to be bonded to the thiol group of the thiol compound derivative.

In addition, although the linker is not particularly limited, to suppress the nonspecific adsorption of a contaminant or the like to the surface of the magnetic particle, the linker is preferably formed so as to have an intermediate moiety configured to modify the surface property of the magnetic particle.

From the viewpoint of effectively suppressing the nonspecific adsorption of the contaminant or the like, the intermediate moiety preferably includes the polymer chain of a homopolymer or a copolymer of a monomer selected from the group consisting of ethylene glycol, 2-methoxy acrylate, 2-methacryloyloxyethyl phosphorylcholine and 3-[[2-(methacryloyloxy)ethyl] dimethylammonio] propionate.

Although the mass-average molecular weight of the polymer chain is not particularly limited, the mass-average molecular weight is preferably from 2,000 to 10,000. When the mass-average molecular weight is less than 2,000, it may be difficult to suppress the nonspecific adsorption of the contaminant or the like, and when the mass-average molecular weight is more than 10,000, the number of the boronic acid groups to be bonded to the magnetic particles through the linkers per unit area reduces owing to the steric hindrance of the polymer chain, and hence the ability of the complex to collect the sialic acid reduces in some cases.

A method of introducing the intermediate moiety is not particularly limited, and the moiety can be introduced by a known method. However, when the thiol compound derivative is used, the moiety can be introduced as the intermediate chain of a polymer compound one end of which is terminated by a functional group to be bonded to the boronic acid group (e.g., an amino group or a hydroxyl group), and the other end of which is terminated by the thiol group (e.g., -NH-PEG-S- formed by using NH₂-PEG-SH (where the symbol "PEG" means a polyethylene glycol chain, and the same shall apply hereinafter) as a formation base material).

The respective portions described above, that is, the mechanism to be bonded to the magnetic particle, the mechanism to be bonded to the boronic acid group, the link core member, and the intermediate moiety may each be formed from a known formation material or formation reagent. Although the linker has a novel structure, the linker may be formed with reference to a reaction procedure known about each of its portions.

### (Method of collecting Sialic Acid)

A method of collecting sialic acid of the present invention includes at least a bonding step, a recovering step and a dissociating step.

The method is described below with reference to the drawings.

The method of collecting sialic acid includes using the complex of the present invention. The complex is schematically illustrated in FIG. 1. The complex is represented by reference numeral 1 in the figure.

As illustrated in FIG. 2, the bonding step is performed as a step of bonding sialic acid (e.g., sialic acid protein 2) to the complex 1 by adjusting the pH of a liquid sample, which contains the complex 1 and a biological fluid containing the sialic acid (e.g., the sialic acid protein 2), to less than 6. FIG. 2 is an explanatory view for illustrating the outline of the bonding step.

The sialic acid (e.g., the sialic acid protein 2) binds to the boronic acid group of the complex 1 while having selectivity for a pH condition. The pH condition is less than 6, suitably from about 4 to about 5.9.

A method of adjusting the pH of the liquid sample to less than 6 is, for example, a method including adding an acidic liquid such as an acetate buffer solution to the sample until a target pH is obtained. The adjustment method includes a dispersion operation itself such as a case in which the pH of a sample liquid obtained by dispersing the complex 1 in the biological fluid is less than 6 from the beginning.

The biological fluid is not particularly limited, and examples thereof include blood and urine. However, when the biological fluid is applied to the test of metastatic cancer, blood is used.

The recovering step is a step of separating and recovering the complex 1 after the bonding step from the liquid sample with a magnet.

A method for the recovery is not particularly limited, and examples thereof include: a method including bringing a permanent magnet close to the container of the liquid sample and discarding the liquid in the container under a state in which the complex 1 is attracted to the wall surface of the container; and a method including discarding the liquid in the container under a state in which the complex 1 is attracted to the wall surface of the container with an electromagnet arranged near the container.

As illustrated in FIG. 3, the dissociating step is a step of dissociating the sialic acid (e.g., the sialic acid protein 2) from the complex 1 after the recovering step in a concentration liquid having a pH adjusted to 7 or more. FIG. 3 is an explanatory view for illustrating the outline of the dissociating step.

As described in Examples to be described later, even after a strong bond with the complex 1 has been formed once in the bonding step, the sialic acid (e.g., the sialic acid protein 2) is released from its bond with the boronic acid group of the complex 1 while having selectivity for a pH condition. Thus, the acid is dissociated from the complex 1. The pH condition is 7 or more, suitably from about 7 to about 9.

A method of adjusting the pH of the concentration liquid to 7 or more is, for example, a method including adding an alkaline liquid such as a phosphate buffer solution, which is adjusted to be alkaline, to the liquid until a target pH is obtained.

The concentrate of the sialic acid obtained after the dissociating step may be used as a test sample for a cancer test.

Accordingly, according to the method of collecting sialic acid, a comprehensive cancer test in which a cancer species does not matter while early cancer is included as a target can be achieved by utilizing the characteristics of the sialic acid on metastatic cancer.

Incidentally, as illustrated in FIG. 2, in the bonding step, the sialic acid (e.g., the sialic acid protein 2) that is not bonded to the complex 1 may occur because of, for example, the following reason: the acid is present at a position distant from the complex 1.

Meanwhile, as described in Examples to be described later, even after the complex 1 has undergone a series of steps formed of the bonding step, the recovering step and the dissociating step, the properties by which the complex 1 is bonded to and dissociated from the sialic acid in accordance with a pH condition are maintained. Accordingly, even in the bonding step and dissociating step of the second and subsequent times in each of which the complex 1 is reused, the sialic acid can be bonded to and dissociated from the complex.

Accordingly, after the series of steps of the first time has been performed on the biological fluid, the same fluid can be subjected to the series of steps of the second and subsequent times by reusing the complex 1 used in the first time, and hence convenience can be improved.

In addition, the biological fluids in the second and subsequent times are not required to be the same as that in the first time, and the series of steps may be performed on each of the different biological fluids collected from one and the same patient at different timings or at different body positions. Even in this case, the second and subsequent biological fluids can each be subjected to the series of steps by reusing the complex 1 used in the series of steps for the first biological fluid, and hence convenience can be improved.

That is, as the method of collecting sialic acid, the bonding step, the recovering step and the dissociating step may be performed on the same or different biological fluid by reusing the complex 1 that has undergone the bonding step, the recovering step and the dissociating step.

### [Examples]

### (Example 1; Production of Complex)

A bonded compound of boronic acid and a thiol compound derivative was obtained by a synthesis scheme illustrated in FIG. 4. Specifically, the following operation was performed.

First, 33.6 mg (0.2 mmol) of 5-boronopicolinic acid (5-BPA, manufactured by Combi-Blocks Inc.) and 12.5 mL of N, N-dimethylformamide (DMF, manufactured by FUJIFILM Wako Pure Chemical Corporation) were loaded into a recovery flask, and then the mixture was subjected to ultrasonic treatment to provide a dissolved liquid.

Next, 175 µL of triethylamine (manufactured by FUJIFILM Wako Pure Chemical Corporation) and 84 mg (0.025 mmol) of polyethylene glycol one terminal of which was an amino group and the other terminal of which was a thiol group (NH₂-PEG-SH, mass-average molecular weight: 3,400, manufactured by Biopharma PEG Scientific Inc.) were loaded into the recovery flask. After that, the mixture was subjected to ultrasonic treatment and then to stirring treatment to provide a dissolved liquid.

Next, 18.2 mg (0.055 mmol) of 4-(4,6-dimethoxy-1,3,5-triazin-2-yl)-4-methyl-morpholinium chloride (DMT-MM, manufactured by FUJIFILM Wako Pure Chemical Corporation) was loaded as a triazine-based condensing agent into the recovery flask, and then the mixture was subjected to stirring treatment for 4 hours to provide the reaction product (BPEG-disulfide) of a reaction between 5-BPA and NH₂-PEG-SH.

Next, a 5 M aqueous solution of sodium hydroxide (manufactured by FUJIFILM Wako Pure Chemical Corporation) was diluted to 100 mM, and the reaction product was subjected to dialysis treatment (molecular weight cutoff: 3,500) with the diluted solution so that solution exchange from DMF and the removal of unreacted 5-BPA were performed.

Next, the solution after the dialysis treatment was stirred for about 12 hours. Further, the same dialysis treatment was performed twice to carefully remove unreacted 5-BPA. After that, the residue was subjected to dialysis treatment with pure water so that solution exchange was performed, followed by the removal of moisture by freeze-drying. Thus, a dry solid of BPEG-disulfide was obtained.

The resultant BPEG-disulfide is in a disulfide state in which thiol terminals are bonded by oxidation. Accordingly, the bonded compound (BPEG-SH) of the boronic acid and the thiol compound derivative is obtained by reducing the disulfide to a thiol molecule with tris(2-carboxyethyl) phosphine hydrochloride (TCEP-HCl, manufactured by FUJIFILM Wako Pure Chemical Corporation) serving as a reducing agent. The reducing treatment was performed immediately before bonding with a magnetic particle to be described below.

A complex in which a boronic acid group was conjugated with a magnetic particle through a linker was prepared by a preparation scheme illustrated in FIG. 5. Specifically, the following operation was performed.

First, 5 mg of succinimidyl-4-(N-maleimidomethyl) cyclohexane-1-carboxylic acid (SMCC, manufactured by ProteoChem) serving as a link core member was dissolved in 100 µL of DMF.

Next, 1 mL of 1 µm Sera-Mag^{™} SpeedBeads Amine-Blocked Particles (manufactured by Global Life Sciences Solutions Operations UK Ltd. (Cytiva), containing an azide) were loaded into an Eppendorf tube, and a pipette was inserted into the Eppendorf tube under a state in which the magnetic particles were attracted to the side surface of the Eppendorf tube with a magnet, followed by the removal of the azide by pipetting. In addition, the residue was subjected to a washing operation with pure water twice to provide a dispersion in which the magnetic particles were dispersed in 1 mL of pure water. The magnetic particles are spherical particles each having a particle diameter of 1 µm whose surfaces are each modified with an amino group.

Next, the dissolved liquid of SMCC in DMF and the aqueous dispersion of the magnetic particles were mixed, and the mixture was subjected to stirring treatment for 1 hour. Unreacted SMCC was removed by washing the magnetic particles after the reaction with pure water. Thus, the magnetic particles whose surfaces were each treated with SMCC were obtained.

Next, the previously obtained BPEG-disulfide whose amount was 9.2 mg was dissolved in 1 mL of pure water to prepare a 2.6 mM aqueous solution of BPEG. In addition, 100 µL of a 200 mM aqueous solution of the previously described TCEP-HCl (Mw: 286.65, 57.4 mg/mL, manufactured by FUJIFILM Wako Pure Chemical Corporation) was prepared.

The two liquids, that is, TCEP (hydrochloric acid solution) and the aqueous solution of BPEG were mixed, and the mixture was subjected to a reaction for 1 hour to provide a solution of the previously described BPEG-SH (see FIG. 4).

Next, the magnetic particles whose surfaces were each treated with SMCC were added to the BPEG-SH solution, and the mixture was subjected to a reaction for 1 hour in a tube shaker. Thus, there was obtained a dispersion having dispersed therein a reaction product (complex according to Example 1) in which a boronic acid group was immobilized onto the surface of each of the magnetic particles through a linker by a thioetherification reaction between the maleimide group of SMCC and the thiol group of BPEG-SH.

### (Example 2: Selective Bonding Property of Sialic Acid in Accordance with pH Condition)

First, as an example, fetuin (manufactured by Merck KGaA (Sigma-Aldrich Co. LLC)) serving as a protein having a high density of sialic acid was prepared as a sialic acid model. Next, the fetuin was dissolved in a 10 mM acetate buffer solution having a pH of 5.0 to provide a 1 mg/mL aqueous solution of the fetuin. 1 mL of the aqueous solution of the fetuin and 64 µL of the dispersion of the complex according to Example 1 were loaded into an Eppendorf tube and were mixed so that the fetuin and the complex were bonded (bonding step).

In the following, as a simple designation, the fetuin serving as a protein having a high density of sialic acid is simply referred to as "sialic acid." However, FIGS. 6 to FIGS. 8 to be described later are each a graph showing the result of the measurement or analysis of the amount or number of fetuin molecules themselves with a "sialic acid quantitation kit." To avoid a misunderstanding that the result is the result of the measurement or analysis of the amount or number of sialic acid molecules themselves liberated from the fetuin by an enzyme, in each of the graphs shown in FIGS. 6 to FIGS. 8, the designation "sialic acid" is avoided, and the faithful representation "fetuin" (protein having a high density of sialic acid) is used. In addition, in description about each of FIGS. 6 to FIGS. 8, it is stipulated that the "sialic acid" is the "fetuin".

Next, a pipette was inserted into the Eppendorf tube under a state in which the magnetic particles were attracted to the side surface of the Eppendorf tube with a magnet, followed by the removal of unreacted sialic acid by suction. After that, the complex after the bonding step was washed with 1 mL of a 10 mM acetate buffer solution twice. After that, the 10 mM acetate buffer solution in the Eppendorf tube was similarly removed by pipetting (recovering step).

Next, 50 µL of a 10 mM phosphate buffer solution (pH: 7.6) was added into the Eppendorf tube in which the complex having bonded thereto the sialic acid remained, and the mixture was shaken and stirred so that the complex and the sialic acid were dissociated from each other (dissociating step).

Thus, a method of collecting sialic acid according to Example 2 was performed.

Next, the dissociated sialic acid in the 10 mM phosphate buffer solution was quantified with sialic acid quantitation kit (Agilent Advance Bio Total Sialic Acid Quantitation Kit, manufactured by Agilent Technologies, Inc.) under a state in which the magnetic particles were attracted to the wall surface of the Eppendorf tube with a magnet.

The quantitative test was performed on each of the following total of five kinds of samples: a case in which the amount of the dispersion of the complex was set to 64 µL as described above; and a case in which the amount was changed to 16 µL, 4 µL, 2 µL or 1 µL.

In addition, for comparison, there was performed a comparative test in which a pH condition was kept at 7.6 all the time by using, instead of the 10 mM acetate buffer solution, a 10 mM phosphate buffer solution whose amount was the same as that of the acetate buffer solution. The comparative test was also performed on each of the following total of five kinds of samples: a case in which the amount of the dispersion of the complex was set to 64 µL, 16 µL, 4 µL, 2 µL or 1 µL.

The results of the quantitative test of the sialic acid (represented as "FETUIN" in the figure) are shown in FIG. 6(a).

As shown in FIG. 6(a) described above, (1) it is found that in the quantitative test in which a pH condition is set to 5.0 with the 10 mM acetate buffer solution, the amount of the sialic acid to be quantified increases with increasing amount of the dispersion of the complex, and hence the sialic acid can be bonded to the complex according to Example 1. That is, even when a complex is formed by using a magnetic particle and a linker to be added for the surface treatment of a boronic acid group for the magnetic particle, a bonding reaction between the boronic acid group and sialic acid can be advanced. The capture of the sialic acid by the complex according to Example 1 depends on the pH condition because the capture is not observed in the comparative test performed while the pH condition is set to 7.6.

In addition, (2) it is found that the sialic acid that is not dissociated from the complex is not detected in the quantitative test, and hence the sialic acid bonded to the complex according to Example 1 once in the bonding step in which the pH condition is set to 5.0 can be dissociated from the complex by performing the dissociating step in which the pH condition is set to 7.6. That is, the selective bonding property of the sialic acid in accordance with the pH condition is effective not only in a situation in which the sialic acid is bonded to the complex but also in a situation in which the sialic acid bonded to the complex is dissociated. Accordingly, even when the sialic acid is bonded to the complex at a high binding constant (Kₐ), bond-free sialic acid can be stably obtained through dissociation from the complex by subsequent pH condition control.

In addition, the result of the analysis of the number of sialic acid molecules (represented as "NUMBER OF FETUIN MOLECULES" in the figure) dissociated in each of the quantitative test (pH: 5.0) and the comparative test (pH: 7.6) each intended for the sample in which the amount of the dispersion of the complex is set to 64 µL is shown in FIG. 6(b).

As shown in FIG. 6(b) described above, in the quantitative test (pH: 5.0), the dissociation of the sialic acid can be observed with a significant difference as compared to the comparative test (pH: 7.6). That is, the effectiveness of pH control on each of the bonding of the sialic acid in the bonding step and the dissociation of the sialic acid in the dissociating step is strongly supported.

### (Example 3: Reusability Test of Complex)

A bonding step, a recovering step and a dissociating step were performed in the same manner as in the method of collecting sialic acid according to Example 2 except that only an amount of 64 µL was adopted as the amount of the dispersion of the complex according to Example 1. The series of steps formed of the bonding step, the recovering step and the dissociating step is defined as a first-time step.

After the dissociating step, a pipette was inserted into an Eppendorf tube under a state in which the magnetic particles were attracted to the wall surface of the Eppendorf tube with a magnet, followed by the recovery of a dissociated solution of the sialic acid by pipetting. After that, a 1 mg/mL aqueous solution of sialic acid (aqueous solution of the fetuin in Example 2, the same shall apply hereinafter) was added as new sialic acid into the Eppendorf tube in which the magnetic particles remained. In addition, a bonding step was performed by adding a 10 mM acetate buffer solution to the tube so that the pH of the mixture was 5.0. Subsequently, the same recovering step and dissociating step as those of the method of collecting sialic acid according to Example 2 were performed. The series of steps formed of the bonding step, the recovering step and the dissociating step was defined as a second-time step, and a series of steps formed of a bonding step, a recovering step and a dissociating step whose contents were the same as those of the second-time step was repeated three times. The repeated steps are defined as a third-time step to a fifth-time step.

Thus, a method of collecting sialic acid according to Example 3 was performed.

In the method of collecting sialic acid according to Example 3, the complex used in the first-time step was subjected to each of the operation of bonding to the sialic acid and the operation of dissociation therefrom five times because the complex was reused in the subsequent second-time step to fifth-time step.

The dissociated solution of the sialic acid collected in each of the first-time step to the fifth-time step was subjected to the same quantitative test as that of Example 2.

The results of the quantitative test of the sialic acid (represented as "FETUIN" in the figure) on the reuse of the complex are shown in FIG. 7.

As shown in FIG. 7 described above, even in the fifth-time step, the amount of the resultant sialic acid was maintained at 80% or more of that in the first-time step. Accordingly, it is recognized that the complex has high reusability.

In an actual cancer test situation, it is assumed that the amount of sialic acid in a biological fluid is extremely trace. Accordingly, when the test is performed only once, the detection omission of the sialic acid caused by the fact that the acid has not reacted with a complex may occur as a problem of a detection limit in terms of concentration.

At this time, it is conceivable that one and the same biological fluid is subjected to a plurality of tests, that is, second and subsequent tests. However, in each of the second and subsequent tests, there occurs a large difference in convenience between a case in which the test is started from the complex production process described in Example 1 and a case in which the complex used in the first test is reused as it is.

In addition, when different biological fluids collected from one and the same patient at different timings or at the different body positions are collectively subjected to a test, there occurs a large difference in convenience between a case in which the complex production process described in Example 1 is performed on each collected biological fluid and a case in which the complex used in the test of the first biological fluid is reused as it is.

It can be said that the high reusability of the complex recognized from FIG. 7 provides excellent convenience in practical use.

### (Example 4: Concentration Test of Sialic Acid)

A bonding step, a recovering step and a dissociating step were performed in the same manner as in the method of collecting sialic acid according to Example 2 except that: the sialic acid concentration of the aqueous solution of the sialic acid was changed from 1 mg/mL to 10 µg/mL; the liquid amount of the aqueous solution of the sialic acid was changed from 1 mL to 10 mL; and only an amount of 64 µL was adopted as the amount of the dispersion of the complex according to Example 1.

Next, after the dissociating step, a dissociated solution of the sialic acid was recovered by extracting the supernatant under a state in which the magnetic particles were attracted to the bottom of an Eppendorf tube with a magnet.

The dissociated solution of the sialic acid thus recovered was subjected to the same quantitative test as that of Example 2. The test is defined as Concentration Test 1 (sialic acid concentration: 10 µg/mL).

In addition, a dissociated solution of the sialic acid was subjected to a quantitative test in the same manner as in Concentration Test 1 except that: the sialic acid concentration of the aqueous solution of the sialic acid was changed from 10 µg/mL to 1 µg/mL; and the liquid amount of the aqueous solution of the sialic acid was changed from 10 mL to 100 mL. The test is defined as Concentration Test 2 (sialic acid concentration: 1 µg/mL).

The test results of Concentration Test 1 are shown in FIG. 8(a). In addition, the test results of Concentration Test 2 are shown in FIG. 8(b). In each of those figures, the term "sialic acid" is not used, and the faithful representation "fetuin" is used.

As shown in FIG. 8(a) and FIG. 8(b), in each of Concentration Tests 1 and 2, the concentration of the sialic acid in the dissociated solution of the sialic acid is about 21 times as high as the concentration in the original aqueous solution of the sialic acid, and hence the sialic acid can be significantly concentrated. The use of the concentrate can significantly improve the detection performance of a cancer test utilizing the sialic acid.

### [Reference Signs List]

- 1: complex
- 2: sialic acid protein

## Claims

1. A complex represented by the following formula (1):
Bₐ-L-Mₚ (1)
where, in the formula (1), Bₐ represents a boronic acid group having a binding constant Kₐ with sialic acid of 500 M⁻¹ or more, Mₚ represents a magnetic particle having ferromagnetism, and L represents a linker for bonding the boronic acid group and the magnetic particle, the complex represented by the formula (1) showing a state in which the boronic acid group and the magnetic particle are chemically bonded through the linker.

2. The complex according to claim 1, wherein the magnetic particle is a spherical particle having a diameter of from 0.1 µm to 10 µm.

3. The complex according to claim 1 or 2, wherein the boronic acid group is represented by at least one selected from the group consisting of the following chemical structural formulae (Bₐ1) and (Bₐ2): 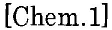 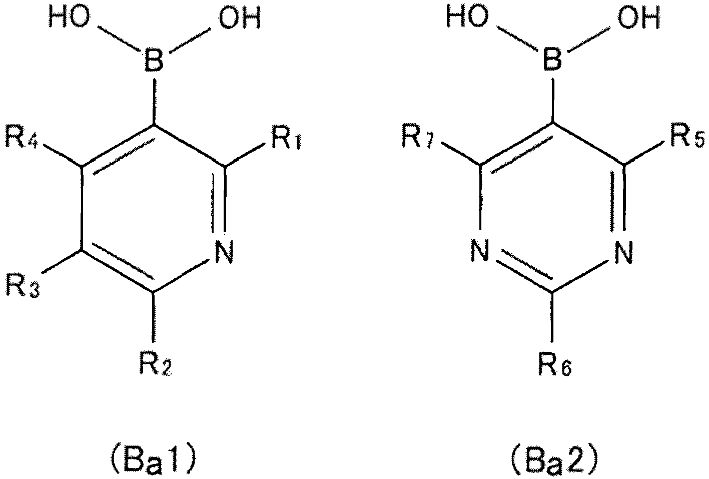
where, in the chemical structural formula (Bₐ1), at least one selected from the group consisting of R₁ to R₄ represents a divalent linking group for forming at least one selected from the group consisting of an ester bond, an ether bond, an amide bond, a urethane bond and a sulfide bond with the linker, and residual symbols each independently represent a hydrogen atom or an alkyl group having 1 or 2 carbon atoms, and
in the chemical structural formula (Bₐ2), at least one selected from the group consisting of R₅ to R₇ represents a divalent linking group for forming at least one selected from the group consisting of an ester bond, an ether bond, an amide bond, a urethane bond and a sulfide bond with the linker, and residual symbols each independently represent a hydrogen atom or an alkyl group having 1 or 2 carbon atoms.

4. The complex according to claim 1 or 2, wherein a formation base material for the linker includes:
an amino group with which a surface of the magnetic particle is modified;
a thiol compound derivative to be bonded to the boronic acid group; and
a link core member having an amide bonding site to be amide-bonded to the amino group and a maleimide group to be bonded to a thiol group of the thiol compound derivative.

5. The complex according to claim 4, wherein the link core member is a heterobifunctional compound having an N-hydroxysuccinimide ester group and the maleimide group.

6. The complex according to claim 1 or 2, wherein the linker has an intermediate moiety configured to modify a surface property of the magnetic particle.

7. The complex according to claim 6, wherein the intermediate moiety includes a polymer chain of a homopolymer or a copolymer of a monomer selected from the group consisting of ethylene glycol, 2-methoxy acrylate, 2-methacryloyloxyethyl phosphorylcholine and 3-[[2-(methacryloyloxy) ethyl] dimethylammonio] propionate.

8. The complex according to claim 7, wherein the polymer chain has a mass-average molecular weight of from 2,000 to 10,000.

9. A method of collecting sialic acid, comprising:
a bonding step of bonding sialic acid to the complex of claim 1 or 2 by adjusting a pH of a liquid sample, which contains the complex and a biological fluid containing the sialic acid, to less than 6;
a recovering step of separating and recovering the complex after the bonding step from the liquid sample with a magnet; and
a dissociating step of dissociating the sialic acid from the complex after the recovering step in a concentration liquid having a pH adjusted to 7 or more.

10. The method of collecting sialic acid according to claim 9, wherein the bonding step, the recovering step and the dissociating step are performed on the same or different biological fluid by reusing the complex that has undergone the bonding step, the recovering step, and the dissociating step.
